# EUROPÄISCHE PATENTANMELDUNG

(11) **EP 0 582 088 A1**
(43) Veröffentlichungstag der Anmeldung: **09.02.1994**
(21) Anmeldenummer: 93110600.9
(22) Anmeldetag: 02.07.1993
(51) Int. Cl.: C08G 18/08, C08G 18/46, C08G 18/42, C08G 18/48, C09D 175/04, C09J 175/04, C09D 11/02

(54) **Polyurethan-dispersion**

(30) Priorität: 09.07.1992 DE 4222530
(71) Anmelder: HOECHST AKTIENGESELLSCHAFT, D-65926 Frankfurt am Main (DE)
(72) Erfinder: Schafheutle, Markus A., Dr., D-65239 Hochheim (DE); Klein, Heinz-Peter, Dr., D-55130 Mainz (DE)

(57) **Zusammenfassung**

Polyurethan-Dispersionen, erhalten durch Umsetzung eines ionischen Polyester-, Polycarbonat- oder Polyetherpolyols oder deren Gemische mit einem Polyisocyanat oder Mischungen von Polyisocyanaten. Derartige Polyurethan-Dispersionen, deren Besonderheit darin besteht, daß die ionischen Gruppen in dem zum Aufbau des Polyurethanmoleküls erforderlichen Polyolen enthalten sind, eignen sich besonders als Bindemittel für Beschichtungen, Klebstoffe oder Druckfarben.

## Beschreibung

Gegenstand der Erfindung sind Polyurethan-Dispersionen, die erhalten werden durch Umsetzung eines ionischen Polyester-, Polycarbonat- oder Polyetherpolyols oder deren Gemische mit einem Polyisocyanat oder Mischungen von Polyisocyanaten. Im folgenden werden unter dem Begriff ionische Polyester, Polycarbonate oder Polyether Verbindungen verstanden, die COOH, -SO₃H und -PO₃H-Gruppen in ihrer neutralisierten und unneutralisierten ("potentiell ionische") Form enthalten.

Die erfindungsgemäßen Polyurethan-Dispersionen leiten sich her von ionischen Polyester-, Polycarbonat- und/oder Polyetherpolyolen. Der ionische Charakter, den diese Polyole zeigen, rührt her von der Einkondensation solcher Monomere, die neben den zur Kondensation notwendigen funktionellen Gruppen (z.B. Hydroxy-, Amino-, Carboxylgruppen) Sulfonsäure-, Carbonsäure- und/oder PhosphonSäure-Gruppen bzw. Sulfonat-, Carboxylat- und/oder Phosphonat-Gruppen enthalten und die nachfolgend als ionische Monomere bezeichnet werden.

Ionische Polyesterpolyole dieser Art werden u.a. in EP-A-0 364 331 beschrieben. Sie werden erhalten durch Umsetzung von Polycarbonsäuren und Polyalkoholen zusammen mit mindestens einem ionischen Monomer, wobei dieses ionische Monomer ein Diol, eine Dicarbonsäure oder ein Diamin sein kann, das mindestens eine Sulfonsäure- oder Sulfonatgruppe enthält.

Ebenso kommt als ionisches Monomer auch ein Polyol oder Polyamin infrage, das eine Sulfonsäure-, Carbonsäure-, Phosphonsäure-, Sulfonat-, Carboxylat- oder Phosphonat-Gruppe enthält.

Die Herstellung der ionischen Polyesterpolyole erfolgt nach bekannten Methoden in einem ein- oder mehrstufigen Verfahren in Abhängigkeit von der Veresterungsgeschwindigkeit der Carbonsäuren. Bei einem zweistufigen Verfahren werden zunächst in Gegenwart eines Katalysators die Carbonsäuren mit dem hydroxyfunktionellen Komponenten verestert und anschließend die ionischen Monomeren eingeführt. Es ist jedoch auch möglich zuerst die ionischen Monomeren mit den entsprechenden hydroxyfunktionellen oder carboxyfunktionellen Komponenten umzusetzen und anschließend die restlichen nichtionischen Monomeren einzukondensieren. Wird ein Polyesterpolyol, hergestellt aus Lactonen, verwendet, wird genauso wie oben verfahren.

Für die ionischen Polyesterpolyole mit Sulfonsäuregruppen oder Phosphonsäuregruppen kann es, um eine möglichst quantitative Kondensation des Sulfomonomeren zu erreichen, erforderlich sein, die Synthese ebenfalls in einem mehrstufigen Verfahren durchzuführen. Es werden dazu in Gegenwart von Katalysatoren zunächst die gesamten hydroxylfunktionellen Komponenten mit den Sulfomonomeren oder Phosphonsäuremonomeren und gegebenenfalls mit den aromatischen, carbonsäurehaltigen Komponenten umgesetzt, so daß bei der Kondensation die für einen quantitativen Umsatz berechnete Destillatmenge erhalten wird. Anschließend kommen gegebenenfalls die aliphatischen Carbonsäurekomponenten zur Reaktion, wobei die Kondensation bis zu einer Säurezahl von kleiner 10, bevorzugt kleiner als 4, durchgeführt wird.

Die Herstellung der ionischen Polycarbonat- sowie der Polyetherpolyole kann nach zwei Mechanismen erfolgen. Die ionischen Monomere können entweder durch Umesterung oder durch Einkondensation unter gleichzeitiger Vergrößerung des Molekulargewichts in Das Polycarbonat- bzw. Polyetherpolyol eingebracht werden.

Zur Herstellung der ionischen Polyether- und Polycarbonatpolyole geht man so vor, daß Polyether- oder Polycarbonatpolyole zusammen mit den ionischen Monomeren, die neben ihrer ionischen Funktion noch eine Dicarbonsäure- oder ein Dicarbonsäureesterfunktion enthalten, umsetzt und das entsprechende Kondensat durch Destillation abscheidet. Auch hier wird bis zu einer Säurezahl kleiner 10, bevorzugt kleiner als 4, umgesetzt.

Im Falle von Dicarbonsäureestern ist der Endpunkt der Reaktion dann erreicht, wenn die Hydroxyzahl dem berechneten Molekulargwicht entspricht.

Die Polycarbonate können zusätzlich noch folgendermaßen mit ionischen Monomeren umgesetzt werden. Die Polycarbonatdiole werden mit Diol-haltigen ionischen Monomeren unter Umesterungsbedingungen miteinander reagiert. Der Endpunkt ist dann erreicht, wenn die resultierende Hydroxylzahl dem gewünschten Molekulargewicht entspricht.

Die Polykondensationsreaktion findet bei Temperaturen zwischen 120 und 230 °C, bevorzugt zwischen 140 und 220 °C, statt. Als Katalysatoren kommen bevorzugt Organometallverbindungen, insbesondere zink-, zinn- oder titanhaltige Verbindungen wie z.B. Zinkacetat, Dibutylzinnoxid, Tetrabutyltitanat, Tetraisopropyltitanat oder Tetrakisethylhexyltitanat in Betracht. Die Menge an Katalysator beträgt bevorzugt 0.1 bis 1.5 Gew.-% des Gesamtansatzes.

Zur Herstellung der ionischen Polyesterpolyole können Polycarbonsäuren aliphatischer, cycloaliphatischer, aromatischer und/oder heterocyclischer Natur verwendet werden, die gegebenenfalls, z.B. durch Halogenatome, substituiert sein. Als Beispiele für solche Carbonsäuren und deren Derivate seien genannt: Bernsteinsäure, Adipinsäure, Azelainsäure, Sebacinsäure, Phthalsäure, Terephthalsäure, Isophthalsäure, Trimellithsäure, Pyromellithsäure, Tetrahydrophthalsäure, Hexahydrophthalsäure, Di- und Tetrachlorphthalsäure, Endomethylentetrahydrophthalsäure und ihr Hexachlorderivat, Glutarsäure, Maleinsäure, Fumarsäure, dimere und trimere Fettsäuren.

Anstelle dieser Säuren können auch ihre Anhydride, soweit sie existieren, oder deren Ester, zum Beispiel die Methyl- oder Ethylester, verwendet werden.

Als Polyalkohole werden bevorzugt niedermolekulare Polyole, Polyhydroxy-polyether, Polylacton-polyole und Polycarbonat-polyole verwendet. Als niedermolekulare Polyole kommen zum Beispiel Ethandiol, die verschiedenen Propan-, Butan-, Hexandiole, Dimethylolcylcohexan, 2,2-Bis(4-hydroxycyclohexyl)propan, Diethylenglykol, Triethylenglykol, Glycerin, Trimethylolethan oder -propan, Hexantriol, Neopentylglykol, Pentaerythrit, Dipentaerythrit oder Sorbit infrage.

Als Polyhydroxy-polyether kommen Verbindungen der Formel

H -[- O - (CHR)ₙ-]ₘ OH

infrage, in der
- R: Wasserstoff oder ein niedriger Alkylrest, gegebenenfalls mit verschiedenen Substituenten, ist,
- n: eine Zahl von 2 bis 6 und
- m: eine Zahl von 10 bis 120 ist.
Beispiele sind Poly(oxytetramethylen)glykole, Poly(oxyethylen)glykole und Poly(oxypropylen)glykole. Die bevorzugten Polyhydroxy-polyether sind Poly(oxypropylen)glykole mit einem Molekulargewicht im Bereich von 88 bis 5000.

Die von Lactonen abgeleiteten Polylactonpolyole erhält man beispielsweise durch die Umsetzung eines ε-Caprolactons mit einem Polyol. Solche Produkte sind in der US-PS 3 169 945 beschrieben.

Die Polylactonpolyole, die man durch diese Umsetzung erhält, zeichnen sich durch die Gegenwart einer endständigen Hydroxylgruppe und durch wiederkehrende Polyesteranteile, die sich von dem Lacton ableiten, aus. Diese wiederkehrenden Molekülanteile können der Formel 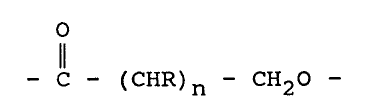
entsprechen, in der n bevorzugt 4 bis 6 ist und der Substituent R Wasserstoff, ein Alkylrest, ein Cycloalkylrest oder ein Alkoxyrest ist, wobei kein Substituent mehr als 12 Kohlenstoffatome enthält.

Das als Ausgangsmaterial verwendete Lacton kann ein beliebiges Lacton oder eine beliebige Kombination von Lactonen sein, wobei dieses Lacton mindestens 6 Kohlenstoffatome in dem Ring enthalten sollte, zum Beispiel 6 bis 8 Kohlenstoffatome und wobei 2 Wasserstoffsubstituenten an dem Kohlenstoffatom vorhanden sein sollten, das an die Sauerstoffgruppe des Rings gebunden ist. Das als Ausgangsmaterial verwendete Lacton kann durch die folgende allgemeine Formel dargestellt werden: 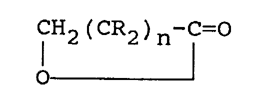
in der n und R die bereits angegebene Bedeutung haben.

Die bei der Erfindung bevorzugten Lactone sind die ε-Caprolactone, bei denen n den Wert 4 hat. Das am meisten bevorzugte Lacton ist das unsubstituierte ε-Caprolacton, bei dem n den Wert 4 hat und alle R-Substituenten Wasserstoff sind. Dieses Lacton wird besonders bevorzugt, da es in großen Mengen zur Verfügung steht und Überzüge mit ausgezeichneten Eigenschaften ergibt. Außerdem können verschiedene andere Lactone einzeln oder in Kombination benutzt werden.

Beispiele von für die Umsetzung mit dem Lacton geeigneten aliphatischen Polyolen sind Ethylenglykol, 1,3-Propandiol, Butandiol-1,4, Hexandiol-1,6, Dimethylolcyclohexan, Trimethylolpropan, Pentaerythrit, 2,2-Bis(4-hydroxycyclohexyl)propan oder Neopentylglykol.

Die Polycarbonat-polyole bzw. Polycarbonatdiole sind Verbindungen, die der allgemeinen Formel 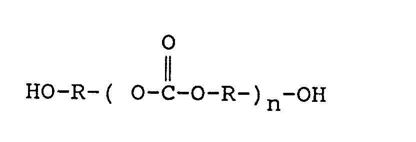
entsprechen, worin R einen Alkylenrest bedeutet. Diese OH-funktionellen Polycarbonate lassen sich durch Umsetzung von Polyolen wie Propandiol-1,3, Butandiol-1,4, Hexandiol-1,6, Diethylenglykol, Triethylenglykol, 1,4-Bishydroxymethylcyclohexan, 2,2-Bis(4-hydroxycyclohexyl)propan, Neopentylglykol, Trimethylolpropan, Pentaerythrit, mit Dicarbonaten, wie Dimethyl-, Diethyl- oder Diphenylcarbonat, oder Phosgen herstellen. Gemische solcher Polyole können ebenfalls eingesetzt werden.

Als Beispiele für ionische Monomere mit Sulfogruppen seien folgende Verbindungen genannt: Sulfophthalsäure, Sulfoterephthalsäure, Sulfoisophthalsäure, Sulfoisophthalsäuredimethylester, 1-Hydroxy-3-sulfonsäure-6-aminonaphthalin, (Gammasäure), 1,3-Phenylendiamin-4-sulfonsäure, 1-Amino-8-naphthol-4-sulfonsäure, Chromotropsäure, 4,4'-Diaminostilben-2,2'-disulfonsäure, 2,3-Dihydroxynaphthalin-6-sulfonsäure, 3-Hydroxy-2-hydroxymethylpropansulfonsäure, 1,4-Dihydroxybutansulfonsäure.
Beispiele für ionische Monomere mit einer Carboxylgruppe sind α-C₂-C₁₀-Bishydroxycarbonsäuren wie z.B. Dihydroxypropionsäure, Dimethylolpropionsäure, Dihydroxyethylpropionsäure, Dimethylolbuttersäure, Dihydroxybernsteinsäure, Dihydroxymaleinsäure, Dihydroxybenzoesäure. Die Sulfonsäure- und Carbonsäuregruppen in diesen Monomeren können auch in Form ihrer Alkali-Salze, wie Lithium-, Natrium-oder Kaliumsalze, oder Aminsalze vorliegen.

Diese Monomeren können vor der Umsetzung mit einem tertiären Amin wie beispielsweise Trimethylamin, Triethylamin, Dimethylanilin, Diethylanilin oder Triphenylamin oder mit Alkalihydroxid neutralisiert werden, um bei der nachfolgenden Umsetzung des ionischen Polyesters, Polycarbonats bzw. Polyethers zum Polyurethanharz eine Reaktion der Säuregruppe mit dem Isocyanat zu vermeiden. Ist die Wahrscheinlichkeit einer solchen Reaktion nur gering, können die Säuregruppen auch erst nach ihrem Einbau in das Polyesterpolyol neutralisiert werden. Die Neutralisation erfolgt dann mit wäßrigen Lösungen von Alkalihydroxiden oder mit Aminen, zum Beispiel mit Trimethylamin, Triethylamin, Dimethylanilin, Diethylanilin, Triphenylamin, Dimethylethanolamin, Aminomethylpropanol, Dimethylisopropanolamin oder mit Ammoniak. Daneben kann die Neutralisation auch mit Mischungen aus Aminen und Ammoniak vorgenommen werden. Ebenso können Mischungen aus Aminen, Ammoniak und Alkalihydroxiden verwendet werden.

Die so erhaltenen ionischen Polyesterpolyole, Polycarbonatpolyole bzw. Polyetherpolyole, werden dann mit einem Polyisocyanat, vorzugsweise einem Diisocyanat, umgesetzt. Als Polyisocyanate kommen alle hier bekannten Verbindungen dieser Art in Frage, beispielsweise Trimethylhexamethylendiisocyanat, Tetramethylendiisocyanat, Pentamethylendiisocyanat, Hexamethylendiisocyanat, Propylendiisocyanat, Ethylendiisocyanat, 1-Methyltrimethylendiisocyanat, 1,3-Cyclopentylendiisocyanat, 1,4-Cyclohexylendiisocyanat, 1,2-Cyclohexylendiisocyanat, 1,3-Phenylendiisocyanat, 1,4-Phenylendiisocyanat, 2,4-Toluylendiisocyanat, 2,6-Toluylendiisocyanat, 4,4'-Biphenylendiisocyanat, 1,5-Naphthylendiisocyanat, 1,4-Naphthylendiisocyanat, 1-Isocyanatomethyl-5-isocyanato-1,3,3-trimethylcyclohexan, Bis-(4-isocyanatocyclohexyl)methan, Bis-(4-isocyanatocyclophenyl)-methan, 4,4'-Diisocyanatodiphenylether, 2,3-Bis-(8-isocyanatooctyl)-4-octyl-5-hexylcyclohexen, m-Tetramethylxylylendiisocyanat oder dessen o- oder p-Isomer, Isocyanurate von obigen Diisocyanaten sowie Allophanate von obigen Diisocyanaten. Gemische solcher Polyisocyanate können ebenfalls eingesetzt werden.

Die Herstellung der Polyurethane aus den ionischen Polyester-, Polyether- und Polycarbonatpolyolen und den Polyisocyanaten erfolgt nach den üblichen und in der Urethan-Chemie bekannten Methoden. Hierbei können als Katalysatoren tertiäre Amine, wie z.B. Triethylamin, Dimethylbenzylamin, Diazabicyclooctan sowie Dialkylzinn (IV)-Verbindungen, wie z.B. Dibutylzinndilaurat, Dibutylzinndichlorid, Dimethylzinndilaurat, eingesetzt werden. Die Reaktion kann sowohl ohne Lösemittel in der Schmelze stattfinden oder in Anwesenheit eines Lösemittels. Als Lösemittel kommen solche in Frage, die späterhin durch Destillation entfernt werden können, beispielsweise Methylethylketon, Methylisobutylketon, Aceton, Tetrahydrofuran, Toluol, Xylol. Diese Lösemittel können ganz oder teilweise nach der Herstellung der Polyurethandispersion abdestilliert werden. Daneben kann man auch wasserverdünnbare hochsiedende Lösemittel, zum Beispiel N-Methylpyrrolidon oder Dimethylformamid einsetzen, die dann in der Dispersion verbleiben.

Die so erhaltenen potentiell ionischen Polyurethane werden dann neutralisiert, falls die Gruppen in den Monomeren nicht bereits von vornherein in neutralisierter Form eingesetzt wurden.

Die Neutralisation erfolgt mit wäßrigen Lösungen von Alkalihydroxiden oder mit Aminen, zum Beispiel mit Trimethylamin, Triethylamin, Dimethylanilin, Diethylanilin, Triphenylamin, Dimethylethanolamin, Aminomethylpropanol, Dimethylisopropanolamin oder mit Ammoniak. Daneben kann die Neutralisation auch mit Mischungen aus Aminen und Ammoniak vorgenommen werden.

Das Mengenverhältnis von ionischem Polyester-, PolyetherPolycarbonatpolyol zu Polyisocyanat kann zum einen so gewählt werden, daß das Äquivalentverhältnis von OH-Gruppen zu NCO-Gruppen größer als 1 ist. In diesem Fall erhält man erfindungsgemäße Polyurethane mit endständigen Hydroxylgruppen. Polyurethane dieser Art können gegebenenfalls unter Kettenverlängerung nachträglich mit weiteren Polyisocyananten der oben geschilderten Art umgesetzt werden. Diese Reaktion kann sowohl in der Schmelze oder Lösung als auch nach dem Dispergieren in der wäßrigen Phase stattfinden. Das Äquivalentverhältnis von OH-Gruppen zu NCO-Gruppen kann aber auch Werte kleiner als 1 annehmen.

Für diesen Fall erhält man erfindungsgemäße Polyurethane mit endständigen freien Isocyanatgruppen. Polyurethane dieser Art werden anschließend mit Alkoholen oder Aminen, die als Kettenstopper dienen, umgesetzt oder es erfolgt eine Molekülvergrößerung (Kettenverlängerung) durch Umsetzung mit Polyolen oder Polyaminen, bevorzugt Diole oder Diamine.

Als Kettenstopper kommen beispielsweise in Frage primäre Amine wie Propylamin, Butylamin, Pentylamin, 2-Amino-2-methylpropanol, Ethanolamin, Propanolamin; sekundäre Amine wie Diethanolamin, Dibutylamin, Diisopropanolamin; primäre Alkohole wie Methanol, Ethanol, Propanol, Butanol, Hexanol, Dodecanol, Stearylalkohol; sekundäre Alkohole wie Isopropanol, Isobutanol und die entsprechenden Thioalkohole.

Geeignete Diole oder Diamine zur Kettenverlängerung sind die üblichen Glykole, wie Ethylenglykol, Propylenglykol, Butandiol-1,3 und -1,4, Hexandiol, Neopentylglykol, Cyclohexandiol, 2,2-Bis(4-hydroxycyclohexyl)-propan, 2,2-Bis-(4-hydroxyethoxyphenyl)-propan, Diethylenglykol oder Dipropylenglykol, Diamine wie Ethylendiamin, Methylpentandiamin, Hydrazin, Piperazin, Isphorondiamin, Toluoldiamin, Diaminodiphenylmethan sowie Aminoalkohole. Die Kettenverlängerung kann auch in der Weise erfolgen, daß ein Teil der freien Isocyanatgruppen in den erfindungsgemäßen Polyurethanen mit Wasser hydrolisiert wird. Die dabei entstehenden Aminogruppen reagieren dann unter Kettenverlängerung mit den noch vorhandenen Isocyanatgruppen.

Die erfindungsgemäßen Polyurethane werden nach ihrer Synthese, entweder in der Schmelze oder in einem organischen Lösemittel, durch Zugabe von Wasser in eine wäßrige Dispersion überführt.

Erfolgte die Herstellung des Polyurethanharzes in einem abdestillierbaren Lösemittel, das entweder ein Azeotrop mit einem Siedepunkt unter 100 °C bildet, oder selbst einen Siedepunkt unter 100 °C hat, beispielsweise in Aceton oder Xylol, so wird dieses Lösemittel abschließend aus der Dispersion abdestilliert. Man erhält in allen Fällen wäßrige Polyurethan-Dispersionen. Die Säurezahlen dieser Polyurethan-Dispersionen liegen im Bereich von 0 bis 80, besonders bevorzugt im Bereich von 0 bis 40 Einheiten.

Bei der Herstellung dieser Polyurethan-Dispersionen ist es auch möglich, zusätzlich zu den ionischen Gruppen im Polyester-, Polycarbonat und/oder Polyetherblock noch ionische Monomere in den Polyurethanblock einzubauen. Dies kann dadurch geschehen, daß das ionische Makrodiol zusammen mit einem Diol oder Diamin eingesetzt wird, das Sulfo-, Carboxyl- oder Phosphono-Gruppen enthält, und dann zusammen mit einem Diisocyanat umgesetzt wird. Eine weitere Variante besteht darin, das isocyanatterminierte Polyurethanpräpolymer mit einem ionischen Polyamin oder Polyol in organischer Phase (Lösemittelvariante) oder in wäßriger Phase kettenzuverlängern. Die prinzipiellen Möglichkeiten der Synthese, wie sie zuvor beschrieben wurden, werden durch die Einfügung dieser zusätzlichen ionischen Monomere in den Polyurethanblock nicht berührt.

Aufgrund ihres chemischen Aufbaus sind die erfindungsgemäßen Polyurethan-Dispersionen für eine vielseitige Anwendung geeignet, z.B. zur Herstellung von Beschichtungssystemen, unter anderem für die Beschichtung von Holz, als Bindemittel für wasserverdünnbare Klebstoffe oder als Harze für Druckfarben. Ebenfalls sehr gut geeignet sind die erfindungsgemäßen Polyurethan-Dispersionen zur Anwendung als Füller in einem mehrschichtigen Lackaufbau.

Sie sind kombinierbar und im allgemeinen verträglich mit anderen wäßrigen Kunststoffdispersionen und -lösungen, z.B. Acryl- und/oder Methacrylpolymerisaten, Polyurethan, Polyharnstoff-, Polyester- sowie Epoxidharzen, Thermoplasten auf Basis von Polyvinylacetat, -vinylchlorid, -vinylether, -chloropren, -acrylnitril, Äthylen-Butadien-Styrol-Copolymerisaten. Sie lassen sich auch mit verdickend wirkenden Substanzen auf Basis von carboxylgruppenhaltigen Polyacrylaten bzw. Polyurethanen, Hydroxyethylcellulose, Polyvinylalkoholen sowie anorganischen Thixotropierungsmitteln, wie Bentonit, Natrium-Magnesium- und Natrium-Magnesium-Fluor-Lithium-Silikate, kombinieren.

Die erfindungsgemäßen Polyurethan-Dispersionen lassen sich auf die verschiedensten Substrate, z.B. Keramik, Holz, Glas, Beton, vorzugsweise Kunststoffe, wie Polycarbonat, Polystyrol, Polyvinylchlorid, Polyester, Poly(meth)acrylate, Acrylnitril-Butadien-Styrol-Polymerisate und dergleichen, sowie vorzugsweise auf Metall, wie Eisen, Kupfer, Aluminium, Stahl, Messing, Bronze, Zinn, Zink, Titan, Magnesium und dergleichen aufbringen. Sie haften auf den verschiedenen Unterlagen ohne haftvermittelnde Grundierungen bzw. Zwischenschichten.

Die erfindungsgemäßen Polyurethan-Dispersionen sind z.B. für die Herstellung von korrosionsschützenden Überzügen und/oder Zwischenbeschichtungen für die verschiedensten Anwendungsgebiete geeignet, insbesondere zur Herstellung von Metallic- und Unibasislacken in Mehrschicht-Lackaufbauten für die Gebiete der Automobil- und Kunststofflackierung und zur Erzeugung von Grundierungslacken für das Gebiet der Kunststofflackierung.

Die erfindungsgemäßen Polyurethan-Dispersionen zeichnen sich in der Anwendung als Füller durch verbesserte Steinschlagfestigkeit sowie gute Zwischenhaftung aus. Außerdem besitzen sie eine gute Reißdehnung, eine gute Zwischenschichthaftung sowie eine ausgezeichnete Schlagzähigkeit. Die Beständigkeit gegen Luftfeuchtigkeit und Lösemittel ist ebenfalls sehr gut.

Aufgrund von kurzen Ablüftzeiten der auf den erfindungsgemäßen Polyurethan-Dispersionen basierenden Basislacke kann die pigmentierte Basislackschicht ohne Einbrennschritt (Naß-in Naß-Verfahren) mit einem Klarlack überlackiert und anschließend zusammen eingebrannt oder forciert getrocknet werden. Basislacke, hergestellt mit den erfindungsgemäßen Polyurethan-Dispersionen, liefern weitgehend unabhängig von der Einbrenn- bzw. Trocknungstemperatur Lackfilme gleicher Qualität, so daß sie sowohl als Reparaturlack von Kraftfahrzeugen als auch als Einbrennlack bei der Serienlackierung von Kraftfahrzeugen eingesetzt werden können. In beiden Fällen resultieren Lackfilme mit einer guten Haftung auch auf der Originallackierung und mit einer guten Beständigkeit gegenüber Schwitzwasser. Weiterhin wird die Brillanz der Lackschicht nach einem Schwitzwassertest nicht nennenswert verschlechtert.

Bei der Formulierung von wasserverdünnbaren Lacken mit den erfindungsgemäßen Polyurethan-Dispersionenn können die in der Lackindustrie üblichen Vernetzer, wie z.B. wasserlösliche oder - emulgierbare Melamin- oder Benzoguanaminharze, wasseremulgierbare Polyisocyanate oder wasseremulgierbare Präpolymeren mit endständigen Isocyanatgruppen, wasserlösliche oder - dispergierbare Polyaziridine und blockierte Polyisocyanate zugesetzt werden. Die wäßrigen Beschichtungssysteme können alle bekannten und in der Lacktechnologie üblichen anorganischen oder organischen Pigmente bzw. Farbstoffe, sowie Netzmittel, Entschäumer, Verlaufsmittel, Stabilisatoren, Katalysatoren, Füllstoffe, Weichmacher und Lösemittel enthalten.

Die erfindungsgemäßen Polyurethan-Dispersionen können auch unmittelbar zum Verkleben beliebiger Substrate verwendet werden, beispielsweise in Form von Klebstiften, Holzklebern oder Haushaltsklebern. Zur Erzielung von speziellen Klebeeigenschaften können die erfindungsgemäßen Polyurethan-Dispersionen mit anderen Kunststoffdispersionen oder -lösungen (siehe oben) abgemischt werden. Ferner können zur Verbesserung der Wärmestand- und Schälfestigkeit Vernetzer, wie z.B. wasseremulgierende Polyisocyanate, die auch ganz oder teilblockiert sein können oder wasseremulgierbare Präpolymere mit terminalen Isocyanatgruppen, wasserlösliche oder -emulgierbare Melamin- oder Benzoguanaminharze zugesetzt werden.

Die auf den erfindungsgemäßen Polyurethan-Dispersionen basierenden Klebstoffe können die in der Klebstofftechnologie üblichen Zusatzstoffe, wie Weichmacher, Lösungsmittel, Filmbindehilfsmittel, Füllstoffe, synthetische und natürliche Harze enthalten. Sie eignen sich speziell zur Herstellung von Verklebungen von Substraten in der Kraftfahrzeugindustrie, z.B. Verklebung von Innenausbauteilen, und in der Schuhindustrie, z.B. zum Verkleben von Schuhsohle und Schuhschaft. Die Herstellung und Verarbeitung der auf den erfindungsgemäßen Polyurethan-Dispersionen basierenden Klebstoffe erfolgt nach den üblichen Methoden der Klebetechnologie, die bei wäßrigen Dispersions- und Lösungsklebstoffen angewendet werden.

### Beispiele

### Darstellung eines Polyesters mit Sulfonatgruppen

Zu 4,5 kg eines Polyesters, hergestellt aus Hexandiol-1,6 und Adipinsäure (OH-Zahl: 130), werden 543,2 g 5-Sulfoisophthalsäuredimethylester-Natrium-Salz gegeben und mit 10 g Butyltitanat auf 220 °C erwärmt, wobei das entstehende Methanol abdestilliert wird. Es entsteht ein hydroxyterminierter, sulfonatgruppenhaltiger Polyester mit einer OH-Zahl von 77 mg KOH/g.

### Darstellung eines Polyesters mit Sulfonatgruppen

Es werden 2726 g Hexandiol-1,6, 2529 g Adipinsäure sowie 559,1 g Natrium-Salz der 5-Sulfoisophthalsäuredimethylester vorgelegt und die Temperatur langsam auf 220 °C erhöht. Das dabei entstehende Wasser-Methanol-Gemisch wird abdestilliert. Man erhält einen hydroxyterminierten, sulfonatgruppenhaltigen Polyester mit einer OH-Zahl von 77 mg KOH/g.

Durch Verwendung unterschiedlicher Mengen an Diol, Carbonsäure und Sulfonsäure lassen sich in analoger Weise Polyester mit unterschiedlicher OH-Zahl und unterschiedlichem Anteil an wasserlöslichen Gruppen herstellen. Die folgenden Beispiele zeigen die Herstellung von Polyurethan-Dispersionen auf der Grundlage derartiger Polyester mit Sulfonatgruppen.

### Darstellung einer Polyurethandispersion mit Sulfonatgruppen

Zu 284,3 g eines Sulfoisophthalat-haltigen Poly(hexandioladipiats) (OH-Zahl 54) und 16,5 g Ethylenglycol wird bei 130 °C 54,6 g Toluylendiisocyanat zudosiert und bis zu einem NCO-Wert von 0 umgesetzt. Danach wird bei der gleichen Temperatur 39,2 g Tetramethylxylylendiisocyanat zudosiert und bis zu einem NCO-Gehalt von 1,53 % umgesetzt. Es wird mit 521 g heißem entionisiertem Wasser dispergiert und sofort danach eine Lösung von 8,3 g Methylpentandiamin-1,5 in 83,4 g entionisiertem Wasser zudosiert. Nach einer Nachrührzeit von 1 Stunde bei 80 °C erhält man die fertige Polyurethandispersion.

Durch Variation in der Menge der drei Ausgangskomponenten kann man in analoger Weise auch ein OH-terminiertes Polyurethan herstellen, das in dieser Form unmittelbar weiter verwendet werden kann.

### Darstellung einer Polyurethandispersion mit Sulfonatgruppen

Zu 284,3 g eines Sulfoisophthalat-haltigen Poly(hexandioladipiat)s (OH-Zahl 61 mg KOH/g) und 11,2 g Ethylenglycol werden bei 130 °C 99,1 g Tetramethylxylylendiisocyanat zudosiert und bis zu einem NCO-Wert von 1,53 % umgesetzt. Es werden zügig 15,1 g Diethanolamin zugegeben und bis zu einem NCO-Wert von 0 % umgesetzt. Nach dem Dispergieren mit 600g entionisiertem, heißem Wasser erhält man die fertige Dispersion.

### Darstellung eines Polyesters mit Carboxylgruppen

2242 g Adipinsäure und 2572 g Hexandiol-1,6 wird unter Abdestillation des entstehenden Wassers langsam auf 220 °C erhitzt und umgesetzt bis eine Säurezahl von 0 mg KOH/g erreicht ist. Nach Abkühlen werden 536,5 g Adipinsäure und 334,7 g Dimethylolpropionsäure zugegeben und nochmals auf 220 °C erwärmt und destilliert, bis eine Säurezahl von 28 mg KOH/g und eine OH-Zahl von 130 mg KOH/g erreicht ist.

### Darstellung einer Polyesterdispersion mit carboxylgruppen

320 g eines Dimethylolpropansäurehaltigen Poly(hexandioladipiat)s (Säurezahl: 28, OH-Zahl: 130) und 2,8 g Ethylenglykol werden in 440 g Aceton gelöst und bei 50 °C mit 121,4 g Tetramethylxylylendiisocyanat bis zu einem NCO-Wert von 0,77 % umgesetzt. Nach Neutralisieren mit 12,9 g Triethylamin und dem Dispergieren mit 586 g entionisiertem Wasser wird sofort eine Lösung aus 9,4 g Methylpentandiamin und 94 g entionisiertem Wasser zugegeben. Das Aceton wird abdestilliert und das verlorengegangene Wasser wird ersetzt.

## Patentansprüche

1. Polyurethan-Dispersionen, erhalten durch Umsetzung eines ionischen Polyester-, Polycarbonat- oder Polyetherpolyols oder deren Gemische mit einem Polyisocyanat oder Mischungen von Polyisocyanaten.

2. Polyurethan-Dispersionen nach Anspruch 1, dadurch gekennzeichnet, daß das Äquivalent der OH-Gruppen des ionischen Polyester- oder Polyether- oder Polycarbonatpolyols zu den NCO-Gruppen des Polyisocyanats größer als 1 ist.

3. Polyurethan-Dispersionen, erhalten durch Umsetzung eines ionischen Polyester-, Polycarbonat- oder Polyetherpolyols mit einem Polyisocyanat, wobei das Äquivalentverhältnis der OH-Gruppen des Polyols zu den NCO-Gruppen des Polyisocyanats kleiner als 1 ist, und anschließende Umsetzung mit einem Alkohol oder Amin.

4. Polyurethan-Dispersionen, erhalten durch Umsetzung eines ionischen Polyester-, Polycarbonat- oder Polyetherpolyols mit einem Polyisocyanat, wobei das Äquivalentverhältnis der OH-Gruppen des Polyols zu den NCO-Gruppen des Polyisocyanats kleiner als 1 ist, und anschließende Kettenverlängerung durch Umsetzung mit Polyolen oder Polyaminen oder durch Partielle Hydrolyse.

5. Polyurethan-Dispersionen, erhalten durch Umsetzung eines ionischen Polyester-, Polycarbonat- oder Polyetherpolyols mit einem Polyisocyanat, wobei das Äquivalentverhältnis der OH-Gruppen des Polyols zu den NCO-Gruppen des Polyisocyanats größer als 1 ist, und anschließende Umsetzung mit einem weiteren Polyisocyanat.

6. Verwendung der Polyurethan-Dispersionen nach Anspruch 1 bis 5 als Bindemittel für Beschichtungen, Klebstoffe oder Druckfarben.
